# EUROPÄISCHE PATENTSCHRIFT

(11) **EP 3 634 197 B1**
(45) Veröffentlichungstag und Bekanntmachung des Hinweises auf die Patenterteilung: **14.04.2021**
(21) Anmeldenummer: 18727767.8
(22) Anmeldetag: 24.05.2018
(51) Int. Cl.: A47L 15/42, B21D 39/02, B21D 51/18

(54) **SPÜLBEHÄLTER, VERFAHREN ZUM HERSTELLEN EINES SPÜLBEHÄLTERS UND HAUSHALTSGESCHIRRSPÜLMASCHINE**
RINSING CONTAINER, METHOD FOR PRODUCING A RINSING CONTAINER AND HOUSEHOLD DISHWASHING MACHINE
CUVE DE RINÇAGE, PROCÉDÉ DE FABRICATION D'UNE CUVE DE RINÇAGE ET LAVE-VAISSELLE MÉNAGER

(30) Priorität: 09.06.2017 DE 102017209824
(43) Veröffentlichungstag der Anmeldung: 15.04.2020
(73) Patentinhaber: BSH Hausgeräte GmbH, 81739 München (DE)
(72) Erfinder: KLAIBER, Armin, 89312 Günzburg (DE); HERB, Manfred, 89428 Syrgenstein (DE); RÖSSLE, Helmut, 89434 Blindheim (DE); SCHABERT, Johann, 89438 Holzheim (DE); HOTZ, Dieter, 89561 Dischingen (DE)
(86) Internationale Anmeldenummer: PCT/EP2018/063622
(87) Internationale Veröffentlichungsnummer: WO 2018/224324

(56) Entgegenhaltungen:
- DE-A1-102006 055 347
- DE-A1-102009 001 896
- DE-A1-102009 001 897
- DE-A1-102011 017 635
- DE-A1-102015 216 228
- FR-A1- 2 396 603

## Beschreibung

Die vorliegende Erfindung betrifft verschiedene Ausführungsformen eines Spülbehälters für eine Haushaltsgeschirrspülmaschine, eine Haushaltsgeschirrspülmaschine mit einem derartigen Spülbehälter und ein Verfahren zum Herstellen eines derartigen Spülbehälters.

Eine Haushaltsgeschirrspülmaschine weist zumeist einen Spülbehälter auf, welcher aus mehreren miteinander verbundenen Blechabschnitten gebildet ist. In der Regel weist der Spülbehälter eine Rückwand auf, welche mit einem Flansch eines Spülbehältermantels und eines Bodenblechs verbunden wird. Zwischen der Rückwand und dem Flansch ist in der Regel ein Rückwanddichtmittel vorgesehen. Eine Herausforderung besteht darin, konstruktionsbedingte Unebenheiten, wie beispielsweise Kerben, an dem Flansch zuverlässig zu dichten. Beispielsweise können Falzverbindungen Falzkerben aufweisen. Das Dichten von derartigen Falzverbindungen gegen eine gegenüberliegende Dichtfläche stellt dabei eine besondere Schwierigkeit dar.

Die Druckschrift DE 10 2015 216 228 A1 offenbart eine Haushaltsgeschirrspülmaschine mit einem Spülbehälter, welcher mehrere Wandungsteile umfasst und welcher zur Beschickung mit Spülgut frontseitig mit einer Beschickungsöffnung versehen ist, welche durch eine Behältertür zumindest zeitweise verschließbar ist, wobei die rechte Seitenwand, die Decke und die linke Seitenwand eine Haube aus Metall ausbilden, welche im gestreckten Zustand ein vorzugsweise flaches Pressenteil ausbildete und anschließend U-förmig gebogen wurde, wobei ein muldenförmiger Boden aus Metall ein aus einem vorzugsweise austenitischem Stahl gefertigtes Tiefziehteil ist und wobei die an die Haube aus Metall und an den muldenförmigen Boden aus Metall rückseitig angesetzte Rückwand aus Metall als ein vorzugsweise flaches Pressenteil ausgeführt ist. Die beiden außenliegenden Schnittstellen, die Haube aus Metall und der muldenförmige Boden aus Metall können in ihren rückseitigen Bereichen eine 90°-Abkantung nach außen aufweisen. Weiterhin kann die rückseitig an die Haube aus Metall und an den muldenförmigen Boden aus Metall angesetzte Rückwand aus Metall mittels mindestens eines Dichtmittels weitgehend flüssigkeitsdicht in dem Bereich der einander kontaktierenden Randbereiche angebracht, insbesondere angeklebt und/oder vorzugsweise punktförmig angeschweißt, sein. Das Dichtmittel kann einen Silikonwerkstoff oder einen Haftkleber umfassen.

Vor diesem Hintergrund besteht eine Aufgabe der vorliegenden Erfindung darin, einen verbesserten Spülbehälter für eine Haushaltsgeschirrspülmaschine zur Verfügung zu stellen.

Demgemäß wird ein Spülbehälter für eine Haushaltsgeschirrspülmaschine vorgeschlagen, mit einem Bodenblech, einer Rückwand, einem auf dem Bodenblech angeordneten und mit diesem mit Hilfe einer Falzverbindung fest verbunden U-förmigen Spülbehältermantel, einem an dem Bodenblech und dem U-förmigen Spülbehältermantel angeformten Befestigungsflansch zum Befestigen der Rückwand an dem Bodenblech und an dem U-förmigen Spülbehältermantel und einem Rückwanddichtmittel, welches zwischen der Rückwand und dem Befestigungsflansch vorgesehen ist. Ein Falzdichtmittel ist in der Falzverbindung vorgesehen und ein Zusatzdichtmittel ist zwischen dem Falzdichtmittel und dem Rückwanddichtmittel vorgesehen.

Damit wird eine Lösung bereitgestellt, um zum Beispiel in der Falzkerbe des Befestigungsflanschs und/oder in dem Bereich des Tripelpunkts eine zuverlässige Dichtung zu gewährleisten. Der Vorteil ist, dass zum Beispiel konventionelle Falzdichtmittel insbesondere mit im Wesentlichen konstanter Menge, Dicke und/oder Stärke und ein konventionelles Rückwanddichtmittel insbesondere mit im Wesentlichen konstanter Menge, Dicke und/oder Stärke verwendet werden können und insbesondere lediglich mittels Verwenden des Zusatzdichtmittels die Dichtigkeit an der Falzkerbe des Befestigungsflanschs und/oder in dem Bereich des Tripelpunkts verbessert wird. Insbesondere benetzt das Zusatzdichtmittel sowohl die Falzkerbe des Befestigungsflanschs - vorzugsweise auch das Falzdichtmittel - als auch das Rückwanddichtmittel zum Ausbilden einer Dichtung.

Beispielsweise kann zusätzlich die Querschnittsfläche der Dichtmittelraupe des Falzdichtmittels in dem von der Falzverbindung gebildeten Teil des Befestigungsflanschs größer als die Querschnittsfläche in dem mittleren Bereich der Falzverbindung ausgebildet sein, um die Dichtigkeit weiter zu verbessern.

"Querschnittsfläche" der Dichtmittelraupe meint vorliegend in einem Schnitt betrachtet, welcher senkrecht zu einer Tiefenrichtung und/oder einer Breitenrichtung des Spülbehälters oder der Haushaltsgeschirrspülmaschine verläuft. Beispielsweise ist die Dichtmittelraupe im Wesentlichen ein länglicher Körper, dessen Querschnittsfläche entsprechend senkrecht zu einer Längserstreckung der Dichtmittelraupe verläuft.

"Mittlerer Bereich" der Falzverbindung ist insbesondere ein Bereich, welcher entlang der Tiefenrichtung, insbesondere exakt, zwischen einer geschlossenen Tür der Haushaltsgeschirrspülmaschine oder einer Beschickungsöffnung des Spülbehälters und der Rückwand des Spülbehälters vorgesehen ist.

Eine Falzkerbe des mittleren Bereichs der Falzverbindung ist vorzugsweise einem Spülraum, welcher von dem Bodenblech und dem U-förmigen Spülbehältermantel umschlossen ist, zugewandt und befindet sich in einem Sichtbereich des Benutzers.

Gemäß einer Ausführungsform umfasst der Befestigungsflansch einen Teil der Falzverbindung, wobei nur auf oder an diesem Teil der Falzverbindung das Zusatzdichtmittel vorgesehen ist.

Somit wird das Zusatzdichtmittel lediglich partiell an der Falzkerbe des Befestigungsflanschs und/oder dem Tripelpunkt vorgesehen und somit ressourcensparend die Dichtigkeit verbessert.

Ein Bereich an dem die Falzverbindung des Befestigungsflanschs der Rückwand zugewandt ist und mit dieser oder dem Rückwanddichtmittel in Kontakt ist, kann auch als "Tripelpunkt" bezeichnet werden, da der U-förmige Spülbehältermantel, das Bodenblech und die Rückwand in diesem Bereich aneinander angrenzen.

Gemäß einer weiteren Ausführungsform ist das Zusatzdichtmittel als ein Schmelzklebstoff und/oder ein druckempfindlicher Klebstoff ausgebildet.

Der druckempfindliche Klebstoff hat den Vorteil, dass insbesondere eine Verflüssigung oder ein Erweichen des Zusatzdichtmittels mit dem Anpressen der Rückwand an den Befestigungsflansch erfolgt, sodass das Zusatzdichtmittel in die Falzkerbe des Befestigungsflanschs gedrückt wird. Der Schmelzklebstoff kann als Hotmelt ausgebildet oder bezeichnet sein. Alternativ oder zusätzlich kann das Zusatzdichtmittel als Silikon ausgebildet sein oder Silikon umfassen. Beispielsweise weist das Zusatzdichtmittel die gleiche oder eine andere chemische Zusammensetzung auf wie das Falzdichtmittel und/oder das Rückwanddichtmittel.

Gemäß einer weiteren Ausführungsform ist die Rückwand mit einem Aufnahmewulst für ein Rückwanddichtmittel versehen das Rückwanddichtmittel ist zwischen der Rückwand und dem Befestigungsflansch als Dichtmittelraupe vorgesehen, und der Aufnahmewulst eine weist Aufweitung auf, in welcher eine Querschnittsvergrößerung der Dichtmittelraupe vorgesehen ist.

Damit wird eine Lösung bereitgestellt, um zum Beispiel in der Falzkerbe des Befestigungsflanschs und/oder in dem Bereich des Tripelpunkts eine zuverlässige Dichtung zu gewährleisten. Beispielsweise kann die vorgeschlagene Lösung zusätzlich mit dem Zusatzdichtmittel verwendet werden.

Gemäß einer weiteren Ausführungsform ist die Aufweitung des Aufnahmewulsts überlappend zu der Falzverbindung angeordnet.

Gemäß einer weiteren Ausführungsform umfasst der Befestigungsflansch einen Teil der Falzverbindung und das Falzdichtmittel ist in der Falzverbindung vorgesehen und als Dichtmittelraupe ausgebildet. Eine Querschnittsfläche der Dichtmittelraupe in dem von der Falzverbindung gebildeten Teil des Befestigungsflanschs ist größer als eine Querschnittsfläche in einem Bereich der Falzverbindung, welcher entlang der Tiefenrichtung des Spülbehälters zwischen einer Beschickungsöffnung des Spülbehälters und der Rückwand des Spülbehälters vorgesehen ist.

Falzverbindungen haben den Vorteil, dass unterschiedliche Metalle fest und dauerhaft miteinander verbunden werden können. Beispielsweise ist der U-förmige Spülbehältermantel aus einem Stahlblech, welches kostengünstig ist, und das Bodenblech aus einem Edelstahlblech, welches eine hohe Korrosionsbeständigkeit und hochwertige Optik aufweist, gebildet. Der von der Falzverbindung gebildete Teil des Befestigungsflanschs weist insbesondere eine Falzkerbe auf.

Indem die Querschnittsfläche der Dichtmittelraupe partiell an dem Befestigungsflansch erhöht ist, kann die Falzkerbe an dem Befestigungsflansch vollständig mit dem Falzdichtmittel ausgefüllt und gegebenenfalls die Rückwand und/oder ein Rückwanddichtmittel benetzen. Damit kann eine zuverlässige Dichtung des von der Falzverbindung gebildeten Teils des Befestigungsflanschs bereitgestellt werden.

Es versteht sich, dass die Dichtmittelraupe vor dem Ausbilden der Falzverbindung einen ersten Zustand - nach einem Aufbringen auf das Bodenblech und/oder den U-förmigen Spülbehältermantel - und nach dem Ausbilden der Falzverbindung einen zweiten deformierten und/oder gequetschten Zustand aufweist. Die größere Querschnittsfläche kann schon in dem ersten Zustand (zum Beispiel durch Vorsehen einer Verdickung) vorgesehen sein, sodass bei einem Verbringen der Dichtmittelraupe in den zweiten Zustand (Falzen) das Falzdichtmittel partiell an dem Befestigungsflansch aus der Falzverbindung herausgedrückt wird. Ein derartiger partieller Austritt des Falzdichtmittels an dem Befestigungsflansch ist für einen Benutzer der Haushaltsgeschirrspülmaschine nicht oder kaum sichtbar, da der Befestigungsflansch von der Rückwand verdeckt wird. Beispielsweise ist ein Austritt des Falzdichtmittels an der Falzverbindung in dem Sichtbereich des Benutzers unerwünscht.

Ein Bereich an dem die Falzverbindung des Befestigungsflanschs der Rückwand zugewandt ist und mit dieser oder dem Rückwanddichtmittel in Kontakt ist, kann auch als "Tripelpunkt" bezeichnet werden, da der U-förmige Spülbehältermantel, das Bodenblech und die Rückwand in diesem Bereich aneinander angrenzen.

Gemäß einer Ausführungsform umfasst der Spülbehälter ein Rückwanddichtmittel, welches umlaufend entlang des Befestigungsflanschs zwischen der Rückwand und dem Befestigungsflansch vorgesehen ist, wobei in dem von der Falzverbindung gebildeten Teil des Befestigungsflanschs das Falzdichtmittel und das Rückwanddichtmittel miteinander in Kontakt sind.

Beispielsweise ist das Rückwanddichtmittel als Silikon ausgebildet oder weist das Rückwanddichtmittel Silikon auf. Vorzugsweise ist das Rückwanddichtmittel korrespondierend zu dem Befestigungsflansch und insbesondere umlaufend und geschlossen ausgebildet.

Gemäß einer weiteren Ausführungsform weist die größere Querschnittsfläche der Dichtmittelraupe zumindest eine doppelte, dreifache, vierfache oder fünffache Fläche auf als die Querschnittsfläche in dem Bereich der Falzverbindung, welcher entlang der Tiefenrichtung des Spülbehälters zwischen einer Beschickungsöffnung des Spülbehälters und der Rückwand des Spülbehälters vorgesehen ist.

Damit kann eine ausreichende Benetzung der Rückwand und/oder des Rückwanddichtmittels gewährleistet werden, um insbesondere die Falzkerbe an dem Befestigungsflansch abzudichten. Vorzugsweise weist die Dichtmittelraupe einen Durchmesser zwischen 0,8 und 1,2 mm, insbesondere von 1 mm, in dem mittleren Bereich auf und einen Durchmesser zwischen 1,8 und 2,2 mm, insbesondere 2 mm, in einem Bereich der nach einer Umformung den Befestigungsflansch ausbildet.

Gemäß einer weiteren Ausführungsform ist das Falzdichtmittel als Schmelzklebstoff und/oder Silikon ausgebildet.

Beispielsweise sind das Falzdichtmittel und das Rückwanddichtmittel aus demselben Material gebildet oder weisen das Falzdichtmittel und das Rückwanddichtmittel die gleiche chemische Zusammensetzung auf. Alternativ weisen das Falzdichtmittel und das Rückwanddichtmittel unterschiedliche chemische Zusammensetzungen auf. Das Falzdichtmittel ist vorzugsweise ein drucksensitiver Schmelzklebstoff.

Gemäß einer weiteren Ausführungsform umfasst der Spülbehälter einen Rahmen, welcher an einer Beschickungsöffnung des Spülbehälters vorgesehen ist und zumindest abschnittsweise innerhalb des U-förmigen Spülbehältermantels und zumindest abschnittsweise außerhalb des U-förmigen Spülbehältermantels angeordnet ist. Die Falzverbindung umfasst einen Überlappungsbereich mit dem Rahmen und eine Querschnittsfläche der Dichtmittelraupe ist in dem Überlappungsbereich größer als die Querschnittsfläche in dem Bereich der Falzverbindung, welcher entlang der Tiefenrichtung des Spülbehälters zwischen einer Beschickungsöffnung des Spülbehälters und der Rückwand des Spülbehälters vorgesehen ist.

Das für die Querschnittsfläche der Dichtmittelraupe in dem von der Falzverbindung gebildeten Teil des Befestigungsflanschs gesagte gilt entsprechend für die Querschnittsfläche der Dichtmittelraupe in dem Überlappungsbereich. Beispielsweise bildet der Überlappungsbereich keinen Sichtbereich des Benutzers aus, sodass entsprechend ein Austritt des Falzdichtmittels aus dem Falz nicht sichtbar ist. Schon in dem ersten Zustand der Dichtmittelraupe können zwei Verdickungen, nämlich für den Befestigungsflansch und für den Überlappungsbereich, vorgesehen werden. Der mittlere Bereich liegt dabei vorzugsweise zwischen den Verdickungen. Es versteht sich, dass zwei entsprechende Dichtmittelraupen an zwei Falzverbindungen des Spülbehälters ausgebildet sein können.

Gemäß einer weiteren Ausführungsform weist die Falzverbindung in dem Überlappungsbereich der Falzverbindung eine größere Breite auf als in dem Bereich der Falzverbindung, welcher entlang der Tiefenrichtung des Spülbehälters zwischen einer Beschickungsöffnung des Spülbehälters und der Rückwand des Spülbehälters vorgesehen ist.

Dies kommt zum Beispiel dadurch zustande, dass die Falzverbindung in dem Überlappungsbereich eine geringere Verdichtung aufweist, da ein Falzvorgang in dem Überlappungsbereich unter erschwerten Bedingungen erfolgt. Beispielsweise ist eine Biegekraft (oder Falzkraft), mit der die Bleche zu der Falzverbindung gebogen (gefalzt) werden, in dem Überlappungsbereich verringert, da aufgrund des Rahmens lediglich eine verringerte Gegenkraft aufgebracht werden kann. Um dennoch eine ausreichende Dichtigkeit der Falzverbindung zu gewährleisten, wird eine erhöhte Menge des Falzdichtmittels in dem Überlappungsbereich vorgesehen.

Im Übrigen wird eine Haushaltsgeschirrspülmaschine mit einem Spülbehälter, wie vorstehend beschrieben, vorgeschlagen.

An dem Spülbehälter kann eine Tür angeschlagen sein, welche um eine Schwenkachse verschwenkbar ist, um den Spülbehälter zu öffnen und zu schließen. In dem Spülbehälter kann eine Vielzahl, beispielsweise drei, übereinander angeordneter Spülgutaufnahmen für Spülgut vorgesehen sein.

Weiterhin wird ein Verfahren zum Herstellen eines Spülbehälters für eine Haushaltsgeschirrspülmaschine vorgeschlagen, mit den Schritten:
- Bereitstellen eines Bodenblechs, einer Rückwand und eines U-förmigen Spülbehältermantels,
- Anordnen des U-förmigen Spülbehältermantels auf dem Bodenblech,
- Ausbilden der Falzverbindung und Verbinden des U-förmigen Spülbehältermantels mit dem Bodenblech mit Hilfe der Falzverbindung,
- Anformen eines Befestigungsflanschs an dem Bodenblech und dem U-förmigen Spülbehältermantel zum Befestigen der Rückwand an dem Bodenblech und an dem U-förmigen Spülbehältermantel,
- Anordnen der Rückwand an dem Befestigungsflansch,
- Vorsehen eines Falzdichtmittels in der Falzverbindung,
- Vorsehen eines Rückwanddichtmittels zwischen der Rückwand und dem Befestigungsflansch, und
- Vorsehen eines Zusatzdichtmittels zwischen dem Falzdichtmittel und dem Rückwanddichtm ittel.

Beispielsweise erfolgt das Vorsehen des Falzdichtmittels in der Falzverbindung mit dem Ausbilden der Falzverbindung, wobei das Falzdichtmittel vor dem Ausbilden auf das Bodenblech aufgebracht wird.

Gemäß einer Ausführungsform wird nach dem Anordnen der Rückwand an dem Befestigungsflansch eine Druckkraft mit Hilfe eines Stempels auf einen abgeknickten Eckabschnitt der Falzverbindung zum Verringern eines Eckradius der Falzverbindung in dem Eckabschnitt und zum Hineindrücken des Zusatzdichtmittels in die Falzverbindung aufgebracht.

Vorzugsweise weist die Falzverbindung in einem Schnitt senkrecht zu einer Höhenrichtung betrachtet eine vierfache Blechdicke auf. Im Gegensatz dazu liegt eine einfache Blechdicke oberhalb und unterhalb der Falzverbindung vor. Bei dem Anformen des Befestigungsflanschs ist der verbleibende Eckradius beziehungsweise Krümmungsradius an dem Eckabschnitt in der Falzverbindung größer als oberhalb und unterhalb der Falzverbindung. Daher ist es von Vorteil, mittels des Stempels den Eckradius zusätzlich partiell an der Falzverbindung nachzubiegen, um Unebenheiten an dem Befestigungsflansch auszugleichen. Weiterhin werden dadurch das Zusatzdichtmittel und/oder das Rückwanddichtmittel und/oder das Falzdichtmitten in die Falzkerbe des Befestigungsflanschs gedrückt.

Gemäß einer weiteren Ausführungsform wird ein Verfahren mit folgenden zusätzlichen Schritten vorgeschlagen:
- vor dem Anordnen des U-förmigen Spülbehältermantels auf dem Bodenblech Vorsehen eines Falzdichtmittels an dem Bodenblech und/oder dem U-förmigen Spülbehältermantel zum Dichten einer Falzverbindung und Ausbilden einer Dichtmittelraupe, und
- vor dem Anformen der Rückwand an dem Befestigungsflansch Anformen eines Befestigungsflanschs an dem Bodenblech und dem U-förmigen Spülbehältermantel zum Befestigen der Rückwand an dem Bodenblech und an dem U-förmigen Spülbehältermantel, wobei eine Querschnittsfläche der Dichtmittelraupe in einem von der Falzverbindung gebildeten Teil des Befestigungsflansches größer ist als eine Querschnittsfläche in einem Bereich der Falzverbindung, welcher entlang der Tiefenrichtung des Spülbehälters zwischen einer Beschickungsöffnung des Spülbehälters und der Rückwand des Spülbehälters vorgesehen ist.

Die für die vorgeschlagenen Spülbehälter beschriebenen Ausführungsformen und Merkmale gelten für jeden der vorgeschlagenen Spülbehälter entsprechend und für die vorgeschlagenen Verfahren entsprechend. Es versteht sich, dass der Befestigungsflansch zwei Falzkerben (oder auch mehr) aufweisen kann und dass die vorgeschlagenen Maßnahmen auf alle Falzkerben anwendbar sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der

Erfindung. Im Weiteren wird die Erfindung anhand von bevorzugten Ausführungsformen unter Bezugnahme auf die beigelegten Figuren näher erläutert.

Es zeigen
- Fig. 1: eine schematische perspektivische Ansicht einer Ausführungsform einer Haushaltsgeschirrspülmaschine;
- Fig. 2: eine schematische perspektivische Explosionsansicht einer Ausführungsform eines Spülbehälters für die Haushaltsgeschirrspülmaschine gemäß Fig. 1;
- Fig. 3: eine schematische perspektivische Ansicht des Spülbehälters für die Haushaltsgeschirrspülmaschine gemäß Fig. 2;
- Fig. 4: eine schematische perspektivische Ansicht eines Abschnitts des Spülbehälters für die Haushaltsgeschirrspülmaschine gemäß Fig. 3;
- Fig. 5: eine Ausführungsform einer Dichtmittelraupe des Abschnitts gemäß Fig. 4;
- Fig. 6: ein schematisches Blockdiagramm einer Ausführungsform eines Verfahrens zum Herstellen des Spülbehälters für die Haushaltsgeschirrspülmaschine gemäß Fig. 3;
- Fig. 7: einen Schnitt VII - VII aus Fig. 1;
- Fig. 8: einen Schnitt VIII - VIII aus Fig. 7;
- Fig. 9: den Schnitt VIII - VIII in einer Explosionsansicht;
- Fig. 10: ein schematisches Blockdiagramm einer Ausführungsform eines Verfahrens zum Herstellen eines Spülbehälters für die Haushaltsgeschirrspülmaschine gemäß Fig. 3;
- Fig. 11: einen Horizontalschnitt durch eine Falzverbindung des Spülbehälters für die Haushaltsgeschirrspülmaschine gemäß Fig. 3; und
- Fig. 12: eine Rückwand des Spülbehälters für die Haushaltsgeschirrspülmaschine gemäß Fig. 3.

In den Figuren sind gleiche oder funktionsgleiche Elemente mit denselben Bezugszeichen versehen worden, sofern nichts anderes angegeben ist.

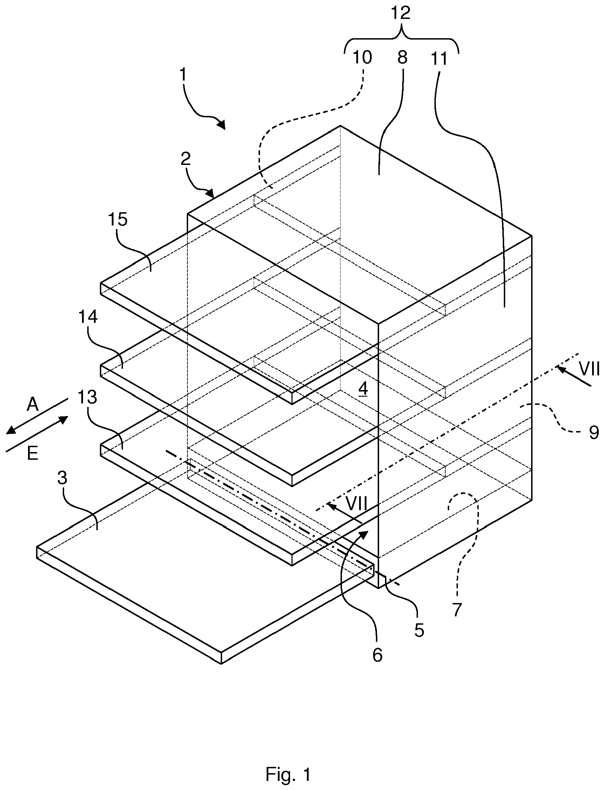

Die Fig. 1 zeigt eine schematische perspektivische Ansicht einer Haushaltsgeschirrspülmaschine 1. Die Haushaltsgeschirrspülmaschine 1 umfasst einen Spülbehälter 2, welcher durch eine Tür 3, insbesondere wasserdicht, verschließbar ist. Hierzu kann zwischen der Tür 3 und dem Spülbehälter 2 eine Dichteinrichtung vorgesehen sein. Der Spülbehälter 2 ist vorzugsweise quaderförmig. Der Spülbehälter 2 kann in einem Gehäuse der Haushaltsgeschirrspülmaschine 1 angeordnet sein. Der Spülbehälter 2 und die Tür 3 können einen Spülraum 4 zum Spülen von Spülgut bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Spülbehälters 2 geschlossen oder geöffnet werden. Der Spülbehälter 2 weist ein Bodenblech 7, eine dem Bodenblech 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Das Bodenblech 7, die Decke 8, die Rückwand 9 und die Seitenwände 10, 11 können beispielsweise aus einem Stahlblech gefertigt sein. Insbesondere kann beispielsweise das Bodenblech 7 aus einem anderen Material gefertigt sein als die Decke 8 und die Seitenwände 10, 11. Beispielsweise kann das Bodenblech 7 aus dem Werkstoff 1.4301, die Decke 8 und die Seitenwände 10, 11 aus dem Werkstoff 1.4016 und die Rückwand 9 ebenfalls aus dem Werkstoff 1.4016 gefertigt sein.

Eine erste Seitenwand 10, eine zweite Seitenwand 11 und die zwischen der ersten Seitenwand 10 und der zweiten Seitenwand 11 angeordnete Decke 8 sind einteilig, insbesondere materialeinstückig, ausgebildet und bilden einen U-förmigen Spülbehältermantel 12 des Spülbehälters 2. Der U-förmige Spülbehältermantel 12, die Rückwand 9 und das Bodenblech 7 sind voneinander getrennt gefertigte Bauteile, die jedoch wasserdicht miteinander verbunden sind. Beispielsweise ist der U-förmige Spülbehältermantel 12 mit dem Bodenblech 7 mit Hilfe zweier Falzverbindungen verbunden, und die Rückwand 9 ist mit dem U-förmigen Spülbehältermantel 12 sowie mit dem Bodenblech 7 verschweißt, insbesondere punktverschweißt.

Die Haushaltsgeschirrspülmaschine 1 weist ferner zumindest eine Spülgutaufnahme 13 bis 15 auf. Vorzugsweise können mehrere, beispielsweise drei, Spülgutaufnahmen 13 bis 15 vorgesehen sein, wobei die Spülgutaufnahme 13 eine untere Spülgutaufnahme oder ein Unterkorb, die Spülgutaufnahme 14 eine obere Spülgutaufnahme oder ein Oberkorb und die Spülgutaufnahme 15 eine Besteckschublade sein kann. Wie die die Fig. 1 weiterhin zeigt, sind die Spülgutaufnahmen 13 bis 15 übereinander in dem Spülbehälter 2 angeordnet. Jede Spülgutaufnahme 13 bis 15 ist wahlweise in den Spülbehälter 2 hinein- oder aus diesem herausverlagerbar. Insbesondere ist jede Spülgutaufnahme 13 bis 15 in einer Einschubrichtung E (Pfeil) in den Spülbehälter 2 hineinschiebbar und entgegen der Einschubrichtung E (Pfeil) in einer Auszugsrichtung A (Pfeil) aus dem Spülbehälter 2 herausziehbar.

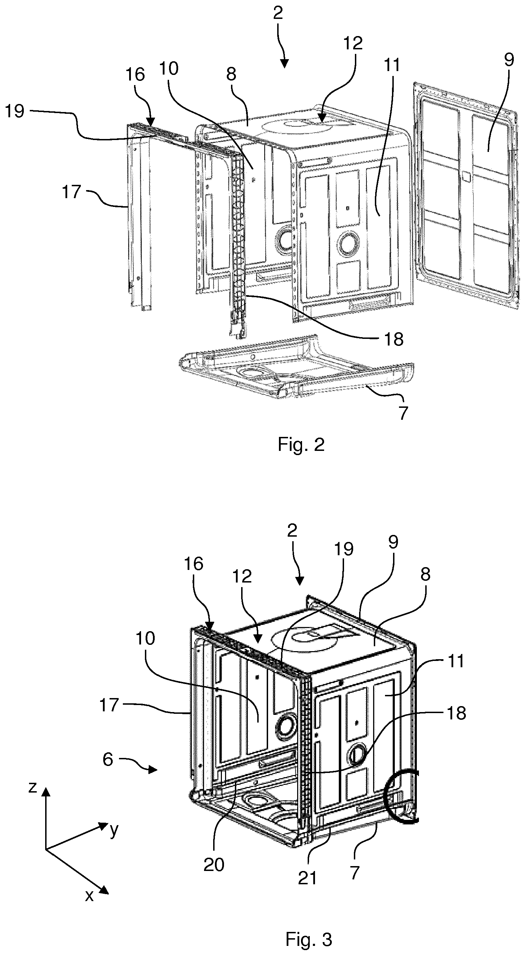

Die Fig. 2 zeigt eine schematische perspektivische Explosionsansicht einer Ausführungsform des Spülbehälters 2 für die Haushaltsgeschirrspülmaschine 1 gemäß der Fig. 1. Die Fig. 3 zeigt eine schematische perspektivische Ansicht des Spülbehälters 2 für die Haushaltsgeschirrspülmaschine gemäß der Fig. 2. Im Folgenden wird auf die Fig. 2 und 3 gleichzeitig Bezug genommen.

Der Spülbehälter 2 für die Haushaltsgeschirrspülmaschine umfasst neben dem U-förmigen Spülbehältermantel 12, dem Bodenblech 7 und der Rückwand 9 einen U-förmigen Rahmen 16, welcher den U-förmigen Spülbehältermantel 12 abstützt. Hierzu ist der Rahmen 16 fest mit dem U-förmigen Spülbehältermantel 12 verbunden. Insbesondere ist der Rahmen 16 mit Hilfe von Thermonieten mit dem U-förmigen Spülbehältermantel 12 verbunden. Der Rahmen 16 ist vorzugsweise ein Kunststoffbauteil. Insbesondere ist der Rahmen 16 ein Kunststoffspritzgussbauteil. Hierdurch kann der Rahmen 16 kostengünstig in großen Stückzahlen hergestellt werden.

Der Rahmen 16 ist so ausgestaltet, dass dieser an der Beschickungsöffnung 6 vorgesehen ist und zumindest abschnittsweise innerhalb des U-förmigen Spülbehältermantels 12 und zumindest abschnittsweise außerhalb des U-förmigen Spülbehältermantels 12 angeordnet ist. Der Spülbehälter 2 für die Haushaltsgeschirrspülmaschine umfasst weiterhin einen in der Fig. 2 und in der Fig. 3 nicht gezeigten Basisträger, welcher unterhalb des Bodenblechs 7 angeordnet ist. Insbesondere stützt sich der Spülbehälter 2 für die Haushaltsgeschirrspülmaschine auf dem Basisträger ab. Der Basisträger ist ein Kunststoffbauteil, insbesondere ein Kunststoffspritzgussbauteil.

Wie die Fig. 3 zeigt, ist der Rahmen 16 vorderseitig auf die Beschickungsöffnung 6 aufgeschoben und versteift somit den U-förmigen Spülbehältermantel 12 in dem Bereich der Beschickungsöffnung 6. Der Rahmen 16 umfasst einen ersten Schenkel 17, einen zweiten Schenkel 18 sowie einen Zwischenschenkel 19, welcher den ersten Schenkel 17 mit dem zweiten Schenkel 18 verbindet. Der erste Schenkel 17 ist mit der ersten Seitenwand 10 fest verbunden, der zweite Schenkel 18 ist mit der zweiten Seitenwand 11 fest verbunden und der Zwischenschenkel 19 ist mit der Decke 8 fest verbunden.

Die erste Seitenwand 10 kann mit Hilfe einer ersten Bördelverbindung oder ersten Falzverbindung 20 mit dem Bodenblech 7 verbunden und die zweite Seitenwand 11 kann mit Hilfe einer zweiten Bördelverbindung oder zweiten Falzverbindung 21 ebenfalls mit dem Bodenblech 7 verbunden sein. Unter Falzen oder Bördeln ist vorliegend eine Verbindungstechnik in der Blechverarbeitung zu verstehen. Diese Verbindungstechnik zählt zur Gruppe des Fügens durch Umformen. Hierbei wird ein Rand eines Blechs beispielsweise mit Hilfe einer Bördelmaschine oder Falzmaschine umgebogen. Hierdurch wird eine Versteifung der umgebogenen Kante erzielt und es kann eine Verbindung aus mehreren Blechbauteilen geschaffen werden. Die Falzverbindungen 20, 21 erstrecken sich jeweils über eine gesamte Tiefe des Spülbehälters 2 für die Haushaltsgeschirrspülmaschine, das heißt, von der Beschickungsöffnung 6 bis zu der Rückwand 9. Eine Breitensichtung x des Spülbehälters 2 für die Haushaltsgeschirrspülmaschine zeigt von der ersten Seitenwand 10 zu der zweiten Seitenwand 11, eine Tiefenrichtung y (Pfeil) zeigt von der Beschickungsöffnung 6 zu der Rückwand 9 und eine Höhenrichtung z (Pfeil) zeigt von dem Bodenblech 7 zu der Decke 8, wobei Breitenrichtung x (Pfeil), Tiefenrichtung y (Pfeil) und Höhenrichtung z (Pfeil) jeweils im Wesentlichen senkrecht zueinander angeordnet sind.

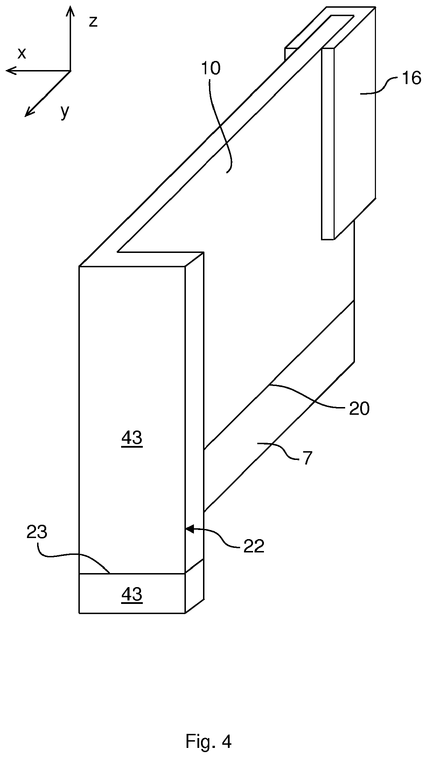

Die Fig. 4 zeigt in einer schematischen perspektivischen Ansicht einen Abschnitt der ersten Seitenwand 10, einen Abschnitt des Bodenblechs 7, welche mittels der ersten Falzverbindung 20 miteinander verbunden sind, und einen Abschnitt des Rahmens 16. Dabei ist an dem Bodenblech 7 und dem U-förmigen Spülbehältermantel 12 (in der Fig. 4 nur erste Seitenwand 10 des Spülbehälters 2 für die Haushaltsgeschirrspülmaschine gezeigt) ein Befestigungsflansch 22 zum Befestigen der Rückwand 9 an dem Bodenblech 7 und an dem U-förmigen Spülbehältermantel 12 angeformt. Der Befestigungsflansch 22 ist von dem Spülraum 4 nach außen weggebogen und bildet eine Verbindungsfläche 43 zu der Rückwand 9 aus, welche der Rückwand 9 zugewandt ist. Weiterhin umfasst der Befestigungsflansch 22 einen Teil 23 der Falzverbindung 20. Es versteht sich, dass die zweite Seitenwand 11 analog mit dem Bodenblech 7 verbunden ist und einen Abschnitt des Befestigungsflanschs 22 umfasst (in der Fig. 4 nicht gezeigt). Weiterhin kann die Decke 8 einen weiteren Abschnitt des Befestigungsflanschs 22 umfassen (in der Fig. 4 nicht gezeigt).

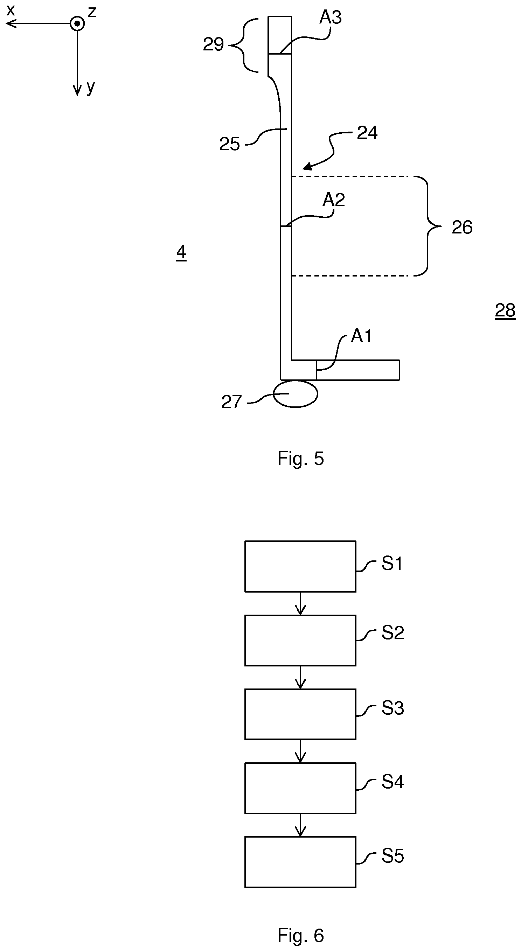

Die Fig. 5 zeigt ein Falzdichtmittel 24, welches in der Falzverbindung 20 gemäß der Fig. 4 vorgesehen und als Dichtmittelraupe 25 ausgebildet ist, in einer schematischen Aufsicht. Die Dichtmittelraupe 25 erstreckt sich ohne Unterbrechung über eine gesamte Länge der Falzverbindung 20. Das Falzdichtmittel 24 ist zum Beispiel als Schmelzklebstoff und/oder Silikon ausgebildet. Eine Querschnittsfläche A1 der Dichtmittelraupe 25 in dem von der Falzverbindung 20 gebildeten Teil 23 des Befestigungsflanschs 22 ist größer als eine Querschnittsfläche A2 in einem mittleren Bereich 26 der Falzverbindung 20. Der mittlere Bereich 26 ist ein Bereich, welcher entlang der Tiefenrichtung y (Pfeil), insbesondere exakt, zwischen der geschlossenen Tür 3 oder der Beschickungsöffnung 6 und der Rückwand 9 vorgesehen ist. Die größere Querschnittsfläche A1 der Dichtmittelraupe 25 weist beispielsweise zumindest eine doppelte, dreifache oder vierfache Fläche auf als die Querschnittsfläche A2 in dem mittleren Bereich 26 der Falzverbindung 20.

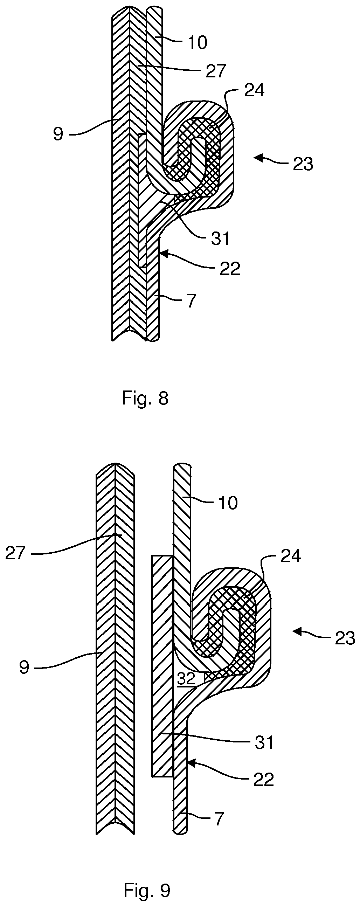

Beispielsweise ist ein Rückwanddichtmittel 27 umlaufend entlang des Befestigungsflanschs 22 zwischen der Rückwand 9 und dem Befestigungsflansch 22 vorgesehen. Wie in der Fig. 9 zu erkennen, weist die Falzverbindung 20 eine Falzkerbe 32 auf, welche insbesondere in dem Bereich des Teils 23 des Befestigungsflanschs 22 das Dichten erschwert. Daher werden in dem von der Falzverbindung 20 gebildeten Teil 23 des Befestigungsflanschs 22 das Falzdichtmittel 24 und das Rückwanddichtmittel 27 miteinander in Kontakt gebracht, um gemeinsam den Spülraum 4 zu einer Umgebung 28 in dem Bereich des Teils 23 des Befestigungsflanschs 22 abzudichten. Außerdem wird eine größere Menge des Falzdichtmittels 24 an dem Teil 23 der Falzverbindung 20 bereitgestellt und eine verbesserte Dichtigkeit an dem Teil 23 der Falzverbindung 20 bewirkt.

Weiterhin weist die Falzverbindung 20 einen Überlappungsbereich 29 mit dem Rahmen 16, insbesondere dem Schenkel 17, auf. In dem Überlappungsbereich 29 kann die Falzverbindung 20 schlechter verschlossen sein als in dem mittleren Bereich 26, da bei einem Verschließen der Falzverbindung 20 in dem Überlappungsbereich 29 von der Innenseite des Spülraums 4 lediglich eine verminderte Gegenkraft aufgrund des dort vorhandenen Rahmens 16 aufgebracht wird. Daher weist die Falzverbindung 20 in dem Überlappungsbereich 29 der Falzverbindung 20 eine größere Breite (in Breitenrichtung x (Pfeil) betrachtet) auf als in dem mittleren Bereich 26 der Falzverbindung 20. Um dennoch eine ausreichende Dichtigkeit an der Falzverbindung 20 in dem Überlappungsbereich 29 zu gewährleisten, wird entsprechend bereichsweise eine erhöhte Menge des Falzdichtmittels 24 bereitgestellt, sodass eine Querschnittsfläche A3 der Dichtmittelraupe 25 in dem Überlappungsbereich 29 größer ist als die Querschnittsfläche A2. Das Bereitstellen der unterschiedlichen Mengen des Falzdichtmittels 24 wird schon vor dem Ausbilden der Falzverbindung 20 beim Aufbringen des Falzdichtmittels 24 auf das Bodenblech 7 und/oder die Seitenwände 10, 11 mittels beispielsweise eines Dosiersystems, welches unterschiedliche Dosierungen vornimmt, verwirklicht.

Die Fig. 6 zeigt ein schematisches Blockdiagramm eines Verfahrens zum Herstellen des Spülbehälters 2 für die Haushaltsgeschirrspülmaschine, insbesondere mit einer Dichtmittelraupe 25, wie in der Fig. 5 gezeigt.

Dabei werden in einem ersten Schritt S1 das Bodenblech 7, die Rückwand 9 und der U-förmiger Spülbehältermantel 12 bereitgestellt. In einem Schritt S2 wird das Falzdichtmittel 24 an dem Bodenblech 7 und/oder dem Spülbehältermantel 12 zum Dichten der Falzverbindung 20, 21 und Ausbilden der Dichtmittelraupe 25 vorgesehen. Vorzugsweise weist dabei die Dichtmittelraupe 25 entlang ihrer Erstreckung unterschiedliche Dicken auf. In einem Schritt S3 wird der U-förmige Spülbehältermantel 12 auf dem Bodenblech 7 angeordnet. In einem Schritt S4 wird die Falzverbindung 20, 21 ausgebildet und dabei der U-förmige Spülbehältermantel 12 mit dem Bodenblech 7 mit Hilfe der Falzverbindung 20, 21 verbunden. In einem Schritt S5 wird der Befestigungsflansch 22 an dem Bodenblech 7 und dem U-förmigen Spülbehältermantel 12 zum Befestigen der Rückwand 9 an dem Bodenblech 7 und an dem U-förmigen Spülbehältermantel 12 angeformt, wobei die Dichtmittelraupe 25 derart in dem Schritt S2 vorgesehen wird, dass die Querschnittsfläche A1 der Dichtmittelraupe 25 in dem von der Falzverbindung 20, 21 gebildeten Teil 23 des Befestigungsflanschs 22 größer ist als die Querschnittsfläche A2 in einem mittleren Bereich 26 der Falzverbindung 20, 21. Weiterhin wird beispielsweise die Dichtmittelraupe 25 derart in dem Schritt S2 vorgesehen, dass die Querschnittsfläche A3 der Dichtmittelraupe 25 in dem Überlappungsbereich 29 größer ist als die Querschnittsfläche A2 in einem mittleren Bereich 26 der Falzverbindung 20, 21.

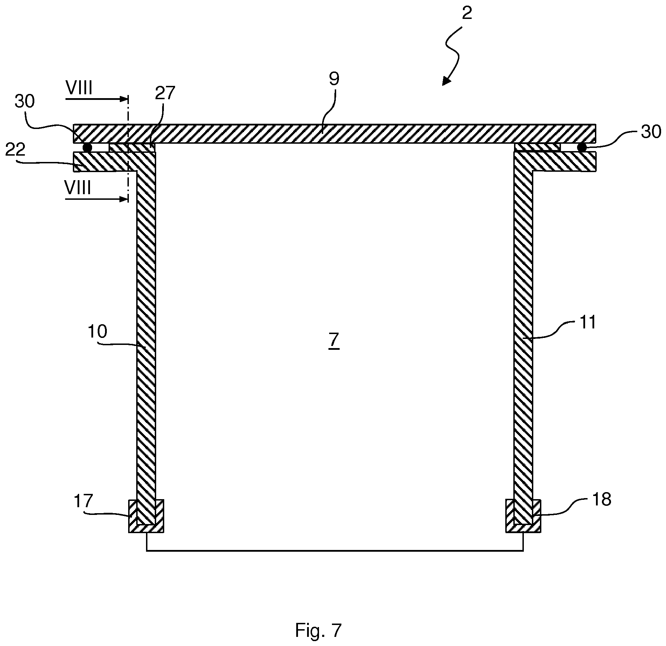

Die Fig. 7 zeigt einen schematischen Schnitt VII - VII aus der Fig. 1. Wie aus der Fig. 7 ersichtlich, umfasst die Haushaltsgeschirrspülmaschine das Rückwanddichtmittel 27, welches zwischen der Rückwand 9 und dem Befestigungsflansch 22 vorgesehen ist und entsprechend zwischen der Rückwand 9 und dem Befestigungsflansch 22 eingeklemmt und zusammengedrückt ist. Vorzugsweise sind die Rückwand 9 und der Befestigungsflansch 22 insbesondere mittels Schweißstellen, insbesondere Schweißpunkte 30, miteinander verbunden.

Die Fig. 8 zeigt einen schematischen Schnitt VIII - VIII aus der Fig. 7. Dabei ist zu erkennen, dass das Falzdichtmittel 24 in der Falzverbindung 20 vorgesehen ist und dass das Rückwanddichtmittel 27 zwischen der Rückwand 9 und dem Befestigungsflansch 22 vorgesehen ist. Weiterhin ist ein Zusatzdichtmittel 31 zwischen dem Falzdichtmittel 24 und dem Rückwanddichtmittel 27 vorgesehen. Dabei ist das Zusatzdichtmittel 31, insbesondere mittels einer Druckkraft F (Pfeil) auf die Rückwand 9, in eine Falzkerbe 32 (siehe Fig. 9) gedrängt worden.

Die Falzkerbe 32 ist insbesondere als Spalt zwischen der Seitenwand 10, 11 und dem Bodenblech 7 ausgebildet. Das Zusatzdichtmittel 31 kommt mit dem Rückwanddichtmittel 27 und dem Falzdichtmittel 24 in Kontakt und dichtet die Falzkerbe 32 zuverlässig ab. Das Zusatzdichtmittel 31 kann als ein Schmelzklebstoff und/oder ein druckempfindlicher Klebstoff ausgebildet sein. Vorzugsweise ist das Zusatzdichtmittel 31 nur auf oder an dem Teil 23 der Falzverbindung 20 vorgesehen, da an dieser Stelle aufgrund der Falzkerbe 32 das Dichten zwischen der Rückwand 9 und dem Befestigungsflansch 22 erschwert ist.

Die Fig. 9 zeigt im Unterschied zu der Fig. 8 schematisch das Zusatzdichtmittel 31 bevor die Rückwand 9 an den Befestigungsflansch 22 gedrückt und mit diesem verschweißt wird. Dabei wird das Zusatzdichtmittle 31 derart partiell auf den Befestigungsflansch 22 aufgebracht, dass es die Falzkerbe 32 zumindest teilweise überdeckt. Anschließend wird bei einem Andrücken der Rückwand 9 an den Befestigungsflansch 22 das Zusatzdichtmittel 31 in die Falzkerbe 32 - zum Ausbilden einer Dichtanordnung wie in der Fig. 8 gezeigt - gedrängt. Beispielsweise weist das Zusatzdichtmittel 31 bei dem Andrücken einen flüssigen oder viskosen Zustand auf.

Vorzugsweise ist das Zusatzdichtmittel 31 als druckempfindlicher Hotmelt ausgebildet. Daraus ergibt sich der Vorteil, dass durch die zähe und klebrige Konsistenz ein Entweichen des Zusatzdichtmittels 31 nach außen unterbunden wird. Weiterhin wird bei dem Andrücken durch den entsprechenden Druck eine Verflüssigung des Zusatzdichtmittels 31 erwirkt. Daher kann das Zusatzdichtmittel 31 die Falzkerbe 32 und das Rückwanddichtmittel 27 zuverlässig benetzen. Alternativ kann das Zusatzdichtmittel 31 eine gleiche chemische Zusammensetzung aufweisen wie das Falzdichtmittel 24 und/oder das Rückwanddichtmittel 27.

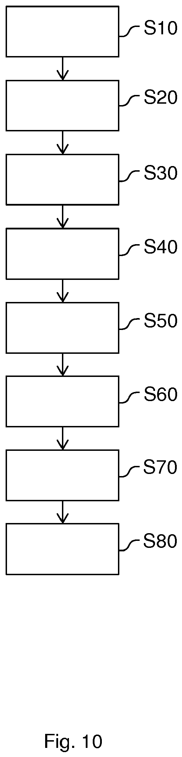

Die Fig. 10 zeigt ein schematisches Blockdiagramm eines Verfahrens zum Herstellen des Spülbehälters 2 für die Haushaltsgeschirrspülmaschine, insbesondere wie in der Fig. 7 bis 9 gezeigt. In einem Schritt S10 werden das Bodenblech 7, die Rückwand 9 und der U-förmige Spülbehältermantel 12 bereitgestellt. In einem Schritt S20 wird der Spülbehältermantel 12 auf dem Bodenblech 7 angeordnet. In einem Schritt S30 wird die Falzverbindung 20 ausgebildet und der U-förmige Spülbehältermantel 12 mit dem Bodenblech 7 mit Hilfe der Falzverbindung 20 verbunden.

In einem Schritt S40 wird der Befestigungsflansch 22 an dem Bodenblech 7 und dem U-förmigen Spülbehältermantel 12 zum Befestigen der Rückwand 9 an dem Bodenblech 7 und an dem U-förmigen Spülbehältermantel 12 angeformt. In einem Schritt S50 wird die Rückwand 9 an dem Befestigungsflansch 22 angeordnet. In einem Schritt S60 wird das Falzdichtmittel 24 in der Falzverbindung 20 vorgesehen. In einem Schritt S70 wird das Rückwanddichtmittel 27 zwischen der Rückwand 9 und dem Befestigungsflansch 22 vorgesehen. In einem Schritt S80 wird das Zusatzdichtmittel 31 zwischen dem Falzdichtmittel 24 und dem Rückwanddichtmittel 27 vorgesehen.

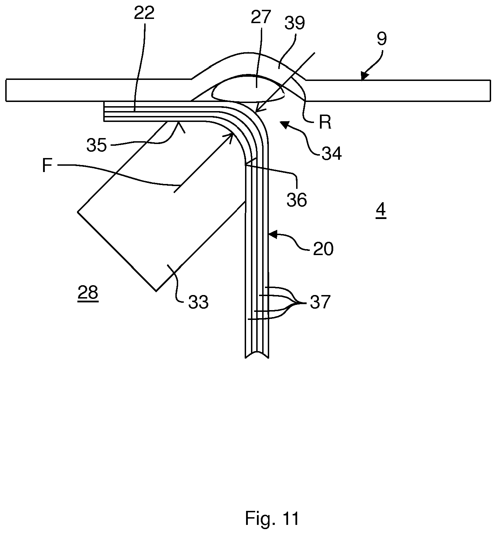

Die Fig. 11 zeigt einen Horizontalschnitt durch die Falzverbindung 20 und die Rückwand 9 während eines weiteren Fertigungsschritts. An der Falzverbindung 20 sind vier Blechschichten 37 nebeneinander angeordnet, was ein Verbiegen der Falzverbindung 20 für das Ausbilden des Befestigungsflanschs 22 erschwert. In dem in der Fig. 11 gezeigten Fertigungsschritt wird nach dem Anordnen der Rückwand 9 samt Rückwanddichtmittel 27 an den Befestigungsflansch 22 mit Hilfe eines Stempels 33 eine Druckkraft F (Pfeil) auf eine Außenseite 35 eines Eckabschnitts 34 der Falzverbindung 20 aufgebracht. Die Außenseite 35 ist dabei eine Seite, welche von dem Spülraum 4 abgewandt ist und von außerhalb des Spülraums 4 zugänglich ist. Dabei wird die Druckkraft F (Pfeil) zum Verringern eines Eckradius R (Pfeil), welcher zum Beispiel auch als Innenradius bezeichnet werden kann, der Falzverbindung 20 in dem Eckabschnitt 34 und insbesondere zum Hineindrücken des Rückwanddichtmittels 27 in die Falzverbindung 20, insbesondere in die Falzkerbe 32, aufgebracht. Der Stempel 33 weist eine Verformungsoberfläche 36 auf, welche keilförmig gebildet ist und mit der Außenseite 35 bei dem Aufbringen der Druckkraft F (Pfeil) in Kontakt kommt.

Alternativ oder zusätzlich wird nach dem Schritt S50 beispielsweise die Druckkraft F (Pfeil) mit Hilfe des Stempels 33 auf den abgeknickten Eckabschnitt 34 der Falzverbindung 20 zum Verringern des Eckradius R (Pfeil) der Falzverbindung 20 in dem Eckabschnitt 34 und zum Hineindrücken des Zusatzdichtmittels 31 in die Falzverbindung 20, insbesondere die Falzkerbe 32, aufgebracht.

Ein derartiges Aufbringen der Druckkraft F (Pfeil) wird beispielsweise als Kalibrieren bezeichnet. Das Kalibrieren hat den Vorteil, dass der Biegeradius R (Pfeil) in der Falzverbindung 20 trotz vierfacher Blechdicke von 2 mm auf unterhalb von 1,4 mm zurechtgebogen werden kann. Da das Rückwanddichtmittel 27 für einen Biegeradius R (Pfeil) von 1,4 mm ausgelegt werden kann, ist ein zuverlässiges Dichten an der Falzkerbe 32 gewährleistet.

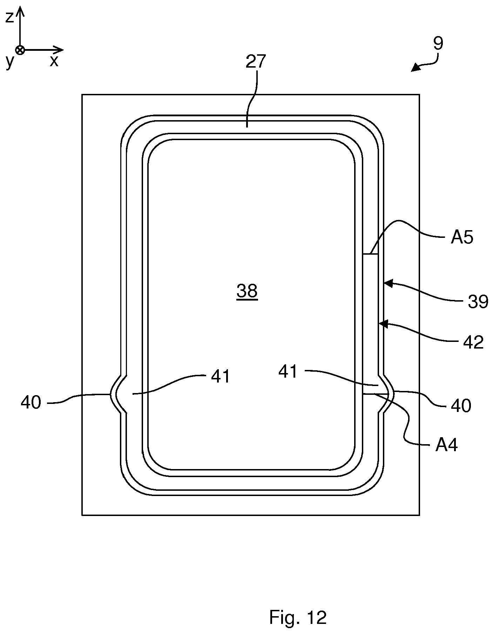

Die Fig. 12 zeigt eine Innenseite 38 der Rückwand 9, welche dem Spülraum 4 zugewandt ist. Auf der Innenseite 38 der Rückwand 9 ist ein Aufnahmewulst 39 (siehe auch Fig. 11) für das Rückwanddichtmittel 27 vorgesehen. Der Aufnahmewulst 39 ist als Vertiefung ausgebildet und ist dazu eingerichtet, das Rückwanddichtmittel 27 aufzunehmen. Weiterhin legt der Aufnahmewulst 39 die Geometrie des Rückwanddichtmittels 27 fest und verhindert ein Verrutschen des Rückwanddichtmittels 27. Das Rückwanddichtmittel 27 ist an der Rückwand 9 als Dichtmittelraupe 42 vorgesehen. Der Aufnahmewulst 39 ist umlaufend ausgebildet und weist zwei Aufweitungen 40 auf, in denen jeweils eine Querschnittsvergrößerung 41 der Dichtmittelraupe 42 vorgesehen ist. Eine Querschnittsfläche A4 an der jeweiligen Querschnittsvergrößerung 41 ist größer als eine Querschnittsfläche A5 an einem Bereich außerhalb der Querschnittsvergrößerung 41. Beispielsweise sind die Querschnittsvergrößerungen 41 als dickste Stellen der Dichtmittelraupe 42 ausgebildet.

Die Aufweitungen 41 des Aufnahmewulsts 39 sind überlappend zu der Falzverbindung 20 und entsprechend an der Falzkerbe 32 vorgesehen. Mit anderen Worten sind die Aufweitungen 40 in Höhenrichtung z (Pfeil) gesehen mit der Falzkerbe 32 auf gleicher Höhe angeordnet. Damit ist sichergestellt, dass an der Falzkerbe 32 in dem Befestigungsflansch 22 zuverlässig abgedichtet wird.

Die Fig. 5, die Fig. 7 bis Fig. 10, die Fig. 11 und die Fig. 12 zeigen unterschiedliche und alternative Maßnahmen, um die Dichtigkeit an der Falzkerbe 32 in dem Befestigungsflansch 22 zu verbessern. Es ist möglich, dass alle Maßnahmen in einer Ausführungsform verwirklicht sind. Außerdem ist es möglich, dass lediglich zwei oder drei der Maßnahmen beliebig kombiniert in einer Ausführungsform vorgesehen sind.

Obwohl die vorliegende Erfindung anhand von Ausführungsbeispielen beschrieben wurde, ist sie vielfältig modifizierbar.

### Verwendete Bezugszeichen

- 1: Haushaltsgeschirrspülmaschine
- 2: Spülbehälter
- 3: Tür
- 4: Spülraum
- 5: Schwenkachse
- 6: Beschickungsöffnung
- 7: Bodenblech
- 8: Decke
- 9: Rückwand
- 10: Seitenwand
- 11: Seitenwand
- 12: U-förmiger Spülbehältermantel
- 13: Spülgutaufnahme
- 14: Spülgutaufnahme
- 15: Spülgutaufnahme
- 16: Rahmen
- 17: Schenkel
- 18: Schenkel
- 19: Zwischenschenkel
- 20: Falzverbindung
- 21: Falzverbindung
- 22: Befestigungsflansch
- 23: Teil der Falzverbindung
- 24: Falzdichtmittel
- 25: Dichtmittelraupe
- 26: Mittlerer Bereich
- 27: Rückwanddichtmittel
- 28: Umgebung
- 29: Überlappungsbereich
- 30: Schweißpunkt
- 31: Zusatzdichtmittel
- 32: Falzkerbe
- 33: Stempel
- 34: Eckabschnitt
- 35: Außenseite
- 36: Verformungsoberfläche
- 37: Blechschicht
- 38: Innenseite
- 39: Aufnahmewulst
- 40: Aufweitung
- 41: Querschnittsvergrößerung
- 42: Dichtmittelraupe
- 43: Verbindungsfläche
- A: Auszugsrichtung (Pfeil)
- A1: Querschnittsfläche
- A2: Querschnittsfläche
- A3: Querschnittsfläche
- A4: Querschnittsfläche
- A5: Querschnittsfläche
- E: Einschubrichtung (Pfeil)
- F: Druckkraft (Pfeil)
- R: Radius (Pfeil)
- S1: Schritt
- S2: Schritt
- S3: Schritt
- S4: Schritt
- S5: Schritt
- S10: Schritt
- S20: Schritt
- S30: Schritt
- S40: Schritt
- S50: Schritt
- S60: Schritt
- S70: Schritt
- S80: Schritt
- VII - VII: Schnitt
- VIII - VIII: Schnitt
- x: Breitenrichtung (Pfeil)
- y: Tiefenrichtung (Pfeil)
- z: Höhenrichtung (Pfeil)

## Patentansprüche

1. Spülbehälter (2) für eine Haushaltsgeschirrspülmaschine (1), mit einem Bodenblech (7), einer Rückwand (9), einem auf dem Bodenblech (7) angeordneten und mit diesem mit Hilfe einer Falzverbindung (20, 21) fest verbunden U-förmigen Spülbehältermantel (12), einem an dem Bodenblech (7) und dem U-förmigen Spülbehältermantel (12) angeformten Befestigungsflansch (22) zum Befestigen der Rückwand (9) an dem Bodenblech (7) und an dem U-förmigen Spülbehältermantel (12), und einem Rückwanddichtmittel (27), welches zwischen der Rückwand (9) und dem Befestigungsflansch (22) vorgesehen ist,
**dadurch gekennzeichnet,**
- **dass** ein Falzdichtmittel (24) in der Falzverbindung (20, 21) vorgesehen ist und
- **dass** ein Zusatzdichtmittel (31) zwischen dem Falzdichtmittel (24) und dem Rückwanddichtmittel (27) vorgesehen ist.

2. Spülbehälter (2) nach Anspruch 1, **dadurch gekennzeichnet, dass** der Befestigungsflansch (22) einen Teil (23) der Falzverbindung (20, 21) umfasst, wobei nur auf oder an diesem Teil (23) der Falzverbindung (20, 21) das Zusatzdichtmittel (31) vorgesehen ist.

3. Spülbehälter (2) nach Anspruch 1 oder 2, **dadurch gekennzeichnet, dass** das Zusatzdichtmittel (31) als ein Schmelzklebstoff und/oder ein druckempfindlicher Klebstoff ausgebildet ist.

4. Spülbehälter (2) nach Anspruch 1, 2 oder 3, **dadurch gekennzeichnet, dass** die Rückenwand (9) mit einem Aufnahmewulst (39) für das Rückwanddichtmittel (27) versehen ist, dass das Rückwanddichtmittel (27) zwischen der Rückwand (9) und dem Befestigungsflansch (22) als Dichtmittelraupe (42) vorgesehen ist und dass der Aufnahmewulst (39) eine Aufweitung (40) aufweist, in welcher eine Querschnittsvergrößerung (41) der Dichtmittelraupe (42) vorgesehen ist.

5. Spülbehälter (2) nach Anspruch 4, **dadurch gekennzeichnet, dass** die Aufweitung (40) des Aufnahmewulsts (39) überlappend zu der Falzverbindung (20, 21) angeordnet ist.

6. Spülbehälter (2) nach einem der vorhergehenden Ansprüche, **dadurch gekennzeichnet, dass** der Befestigungsflansch (22) einen Teil (23) der Falzverbindung (20, 21) umfasst und dass das Falzdichtmittel (24) in der Falzverbindung (20, 21) vorgesehen und als Dichtmittelraupe (25) ausgebildet ist, wobei eine Querschnittsfläche (A1) der Dichtmittelraupe (25) in dem von der Falzverbindung (20, 21) gebildeten Teil (23) des Befestigungsflanschs (22) größer ist als eine Querschnittsfläche (A2) in einem mittleren Bereich (26) der Falzverbindung (20 21), welcher entlang der Tiefenrichtung (y) des Spülbehälters (2) zwischen einer Beschickungsöffnung (6) des Spülbehälters (2) und der Rückwand (9) des Spülbehälters (2) vorgesehen ist.

7. Spülbehälter (2) nach Anspruch 6, **dadurch gekennzeichnet, dass** die größere Querschnittsfläche (A1) der Dichtmittelraupe (25) zumindest eine doppelte, dreifache, vierfache oder fünffache Fläche aufweist als die Querschnittsfläche (A2) in dem mittleren Bereich (26) der Falzverbindung (20, 21), welcher entlang der Tiefenrichtung (y) des Spülbehälters (2) zwischen einer Beschickungsöffnung (6) des Spülbehälters (2) und der Rückwand (9) des Spülbehälters (2) vorgesehen ist.

8. Spülbehälter (2) nach Anspruch 6 oder 7, **dadurch gekennzeichnet, dass** das Falzdichtmittel (24) als Schmelzklebstoff und/oder Silikon ausgebildet ist.

9. Spülbehälter (2) nach Anspruch 6, 7 oder 8, **dadurch gekennzeichnet,** das Rückwanddichtmittel (27) umlaufend entlang des Befestigungsflanschs (22) zwischen der Rückwand (9) und dem Befestigungsflansch (22) vorgesehen ist, wobei in dem von der Falzverbindung (20, 21) gebildeten Teil (23) des Befestigungsflanschs (22) das Falzdichtmittel (24) und das Rückwanddichtmittel (27) miteinander in Kontakt sind.

10. Spülbehälter (2) nach einem der Ansprüche 6 bis 9, **dadurch gekennzeichnet, dass** ein Rahmen (16) vorgesehen ist, welcher an einer Beschickungsöffnung (6) des Spülbehälters (2) vorgesehen ist und zumindest abschnittsweise innerhalb des U-förmigen Spülbehältermantels (12) und zumindest abschnittsweise außerhalb des U-förmigen Spülbehältermantels (12) angeordnet ist, dass die Falzverbindung (20, 21) einen Überlappungsbereich (29) mit dem Rahmen (16) umfasst und dass eine Querschnittsfläche (A3) der Dichtmittelraupe (25) in dem Überlappungsbereich (29) größer ist als die Querschnittsfläche (A2) in dem Bereich (26) der Falzverbindung (20, 21), welcher entlang der Tiefenrichtung (y) des Spülbehälters (2) zwischen einer Beschickungsöffnung (6) des Spülbehälters (2) und der Rückwand (9) des Spülbehälters (2) vorgesehen ist.

11. Spülbehälter (2) nach Anspruch 10, **dadurch gekennzeichnet, dass** die Falzverbindung (20, 21) in dem Überlappungsbereich (29) der Falzverbindung (20, 21) eine größere Breite aufweist als in dem Bereich (26) der Falzverbindung (20, 21), welcher entlang der Tiefenrichtung (y) des Spülbehälters (2) zwischen einer Beschickungsöffnung (6) des Spülbehälters (2) und der Rückwand (9) des Spülbehälters (2) vorgesehen ist.

12. Haushaltsgeschirrspülmaschine (1) mit einem Spülbehälter (2) nach einem der vorhergehenden Ansprüche.

13. Verfahren zum Herstellen eines Spülbehälters (2) für eine Haushaltsgeschirrspülmaschine (1), mit den Schritten:
- Bereitstellen (S10; S1) eines Bodenblechs (7), einer Rückwand (9) und eines U-förmigen Spülbehältermantels (12),
- Anordnen (S20; S3) des U-förmigen Spülbehältermantels (12) auf dem Bodenblech (7),
Ausbilden (S30; S4) der Falzverbindung (20, 21) und Verbinden des U-förmigen Spülbehältermantels (12) mit dem Bodenblech (7) mit Hilfe der Falzverbindung (20, 21),
- Anformen (S40; S5) eines Befestigungsflanschs (22) an dem Bodenblech (7) und dem U-förmigen Spülbehältermantel (12) zum Befestigen der Rückwand (9) an dem Bodenblech (7) und an dem U-förmigen Spülbehältermantel (12),
- Anordnen (S50) der Rückwand (9) an dem Befestigungsflansch (22),
- Vorsehen (S60) eines Falzdichtmittels (24) in der Falzverbindung (20, 21),
- Vorsehen (S70) eines Rückwanddichtmittels (27) zwischen der Rückwand (9) und dem Befestigungsflansch (22), und
- Vorsehen (S80) eines Zusatzdichtmittels (31) zwischen dem Falzdichtmittel (24) und dem Rückwanddichtmittel (27).

14. Verfahren nach Anspruch 13, **dadurch gekennzeichnet, dass** nach dem Anordnen (S50) der Rückwand (9) an dem Befestigungsflansch (22) eine Druckkraft (F) mit Hilfe eines Stempels (33) auf einen abgeknickten Eckabschnitt (34) der Falzverbindung (20, 21) zum Verringern eines Eckradius (R) der Falzverbindung (20, 21) in dem Eckabschnitt (34) und zum Hineindrücken des Zusatzdichtmittels (31) in die Falzverbindung (20, 21) aufgebracht wird.

15. Verfahren nach Anspruch 13 oder 14, mit den Schritten:
- vor dem Anordnen (S3) des U-förmigen Spülbehältermantels (12) auf dem Bodenblech (7) Vorsehen (S2) eines Falzdichtmittels (24) an dem Bodenblech (7) und/oder dem U-förmigen Spülbehältermantel (12) zum Dichten einer Falzverbindung (20, 21) und Ausbilden einer Dichtmittelraupe (25), und
- vor dem Anordnen (S50) der Rückwand (9) an dem Befestigungsflansch (22) Anformen (S5) eines Befestigungsflanschs (22) an dem Bodenblech (7) und dem U-förmigen Spülbehältermantel (12) zum Befestigen der Rückwand (9) an dem Bodenblech (7) und an dem U-förmigen Spülbehältermantel (12), wobei eine Querschnittsfläche (A1) der Dichtmittelraupe (25) in einem von der Falzverbindung (20, 21) gebildeten Teil (23) des Befestigungsflanschs (22) größer ist als eine Querschnittsfläche (A2) in einem mittleren Bereich (26) der Falzverbindung (20, 21), welcher entlang der Tiefenrichtung (y) des Spülbehälters (2) zwischen einer Beschickungsöffnung (6) des Spülbehälters (2) und der Rückwand (9) des Spülbehälters (2) vorgesehen ist.

## Claims

1. Rinsing container (2) for a household dishwashing machine (1), comprising a bottom plate (7), a rear wall (9), a U-shaped rinsing container jacket (12) arranged on the bottom plate (7) and fixedly connected thereto with the aid of a folded joint (20, 21), a fastening flange (22) integrally formed on the bottom plate (7) and on the U-shaped rinsing container jacket (12) for fastening the rear wall (9) to the bottom plate (7) and to the U-shaped rinsing container jacket (12), and a rear wall sealing means (27), which is provided between the rear wall (9) and the fastening flange (22), **characterised in that**
- a folding sealing means (24) is provided in the folded joint (20, 21) and
- an additional sealing means (31) is provided between the folding sealing means (24) and the rear wall sealing means (27).

2. Rinsing container (2) according to claim 1, **characterised in that** the fastening flange (22) comprises a part (23) of the folded joint (20, 21), wherein the additional sealing means (31) is provided only on or against this part (23) of the folded joint (20, 21).

3. Rinsing container (2) according to claim 1 or 2, **characterised in that** the additional sealing means (31) is configured as a hot melt adhesive and/or a pressure-sensitive adhesive.

4. Rinsing container (2) according to claim 1, 2 or 3, **characterised in that** the rear wall (9) is provided with a receiving bead (39) for the rear wall sealing means (27), that the rear wall sealing means (27) is provided between the rear wall (9) and the fastening flange (22) as a sealing bead (42) and that the receiving bead (39) has a widening (40), in which a cross-sectional enlargement (41) of the sealing bead (42) is provided.

5. Rinsing container (2) according to claim 4, **characterised in that** the widening (40) of the receiving bead (39) is arranged so as to overlap with the folded joint (20, 21).

6. Rinsing container (2) according to one of the preceding claims, **characterised in that** the fastening flange (22) comprises a part (23) of the folded joint (20, 21) and that the folding sealing means (24) is provided in the folded joint (20, 21) and is embodied as a sealing bead (25), wherein a cross-sectional surface (A1) of the sealing bead (25) in the part (23) of the fastening flange (22) formed by the folded joint (20, 21) is greater than a cross-sectional surface (A2) in a central region (26) of the folded joint (20, 21), which is provided along the depth direction (y) of the rinsing container (2) between a loading opening (6) of the rinsing container (2) and the rear wall (9) of the rinsing container (2).

7. Rinsing container (2) according to claim 6, **characterised in that** the greater cross-sectional surface (A1) of the sealing bead (25) has at least double, triple or quadruple or quintuple the surface than the cross-sectional surface (A2) in the central region (26) of the folded joint (20, 21), which is provided along the depth direction (y) of the rinsing container (2) between a loading opening (6) of the rinsing container (2) and the rear wall (9) of the rinsing container (2).

8. Rinsing container (2) according to claim 6 or 7, **characterised in that** the folding sealing means (24) is configured as hot melt adhesive and/or silicone.

9. Rinsing container (2) according to claim 6, 7 or 8, **characterised in that** the rear wall sealing means (27) is provided in a peripheral manner along the fastening flange (22) between the rear wall (9) and the fastening flange (22), wherein the folding sealing means (24) and the rear wall sealing means (27) are in contact with one another in the part (23) of the fastening flange (22) formed by the folded joint (20, 21).

10. Rinsing container (2) according to one of the claims 6 to 9, **characterised in that** a frame (16) is provided, which is provided on a loading opening (6) of the rinsing container (2) and which is arranged at least in sections inside the U-shaped rinsing container jacket (12) and at least in sections outside the U-shaped rinsing container jacket (12), that the folded joint (20, 21) comprises an overlapping region (29) with the frame (16) and that a cross-sectional surface (A3) of the sealing bead (25) in the overlapping region (29) is greater than the cross-sectional surface (A2) in the region (26) of the folded joint (20, 21), which is provided along the depth direction (y) of the rinsing container (2) between a loading opening (6) of the rinsing container (2) and the rear wall (9) of the rinsing container (2).

11. Rinsing container (2) according to claim 10, **characterised in that** the folded joint (20, 21) in the overlapping region (29) of the folded joint (20, 21) has a greater width than in the region (26) of the folded joint (20, 21) which is provided along the depth direction (y) of the rinsing container (2) between a loading opening (6) of the rinsing container (2) and the rear wall (9) of the rinsing container (2).

12. Household dishwashing machine (1) with a rinsing container (2) according to one of the preceding claims.

13. Method for producing a rinsing container (2) for a household dishwashing machine (1), having the steps:
- providing (S10; S1) a bottom plate (7), a rear wall (9) and a U-shaped rinsing container jacket (12),
- arranging (S20; S3) the U-shaped rinsing container jacket (12) on the bottom plate (7),
- forming (S30; S4) the folded joint (20, 21) and connecting the U-shaped rinsing container jacket (12) to the bottom plate (7) by means of the folded joint (20, 21),
- integrally forming (S40; S5) a fastening flange (22) on the bottom plate (7) and the rinsing container jacket (12) for fastening the rear wall (9) to the bottom plate (7) and to the U-shaped rinsing container jacket (12),
- arranging (S50) the rear wall (9) on the fastening flange (22),
- providing (S60) a folding sealing means (24) in the folded joint (20, 21),
- providing (S70) a rear wall sealing means (27) between the rear wall (9) and the fastening flange (22), and
- providing (S80) an additional sealing means (31) between the folding sealing means (24) and the rear wall sealing means (27).

14. Method according to claim 13, **characterised in that** after arranging (S50) the rear wall (9) on the fastening flange (22) a compressive force (F) is applied by means of a punch (33) onto a bent-back corner portion (34) of the folded joint (20, 21) in order to reduce a corner radius (R) of the folded joint (20, 21) in the corner portion (34) and to push the additional sealing means (31) into the folded joint (20, 21).

15. Method according to claim 13 or 14, having the steps:
- prior to arranging (S3) the U-shaped rinsing container jacket (12) on the bottom plate (7), providing (S2) a folding sealing means (24) on the bottom plate (7) and/or the U-shaped rinsing container jacket (12) for sealing a folded joint (20, 21) and for forming a sealing bead (25), and
- prior to arranging (S50) the rear wall (9) on the fastening flange (22), integrally forming (S5) a fastening flange (22) on the bottom plate (7) and the U-shaped rinsing container jacket (12) for fastening the rear wall (9) to the bottom plate (7) and to the U-shaped rinsing container jacket (12), wherein a cross-sectional surface (A1) of the part (23) of the fastening flange (22) formed by the folded joint (20, 21) is greater than a cross-sectional surface (A2) in a central region (26) of the folded joint (20, 21), which is provided along the depth direction (y) of the rinsing container (2) between a loading opening (6) of the rinsing container (2) and the rear wall (9) of the rinsing container (2).

## Revendications

1. Cuve de lavage (2) pour un lave-vaisselle ménager (1), avec une tôle de fond (7), une paroi arrière (9), un manteau de cuve de lavage en forme de U (12) disposé sur la tôle de fond (7) et fermement relié à celle-ci à l'aide d'un assemblage par agrafage (20, 21), une bride de fixation (22) formée sur la tôle de fond (7) et le manteau de cuve de lavage en forme de U (12) pour la fixation de la paroi arrière (9) à la tôle de fond (7) et au manteau de cuve de lavage en forme de U (12), et un moyen d'étanchéité de paroi arrière (27), prévu entre la paroi arrière (9) et la bride de fixation (22),
**caractérisée en ce que,**
- un moyen d'étanchéité de pli (24) est prévu dans l'assemblage par agrafage (20, 21) et
- un moyen d'étanchéité supplémentaire (31) est prévu entre le moyen d'étanchéité de pli (24) et le moyen d'étanchéité de paroi arrière (27).

2. Cuve de lavage (2) selon la revendication 1, **caractérisée en ce que** la bride de fixation (22) comprend une partie (23) de l'assemblage par agrafage (20, 21), dans laquelle le moyen d'étanchéité supplémentaire (31) est uniquement prévu sur ou en cette partie (23) de l'assemblage par agrafage (20, 21).

3. Cuve de lavage (2) selon la revendication 1 ou 2, **caractérisée en ce que** le moyen d'étanchéité supplémentaire (31) est formé sous la forme d'un adhésif thermofusible et/ou d'un adhésif sensible à la pression.

4. Cuve de lavage (2) selon la revendication 1, 2 ou 3, **caractérisée en ce que** la paroi arrière (9) est pourvue d'un boudin d'accueil (39) pour le moyen d'étanchéité de paroi arrière (27), **en ce que** le moyen d'étanchéité de paroi arrière (27) est prévu entre la paroi arrière (9) et la bride de fixation (22) sous forme de lèvre de moyen d'étanchéité (42) et **en ce que** le boudin d'accueil (39) présente un élargissement (40), dans lequel une augmentation de section transversale (41) de la lèvre de moyen d'étanchéité (42) est prévue.

5. Cuve de lavage (2) selon la revendication 4, **caractérisée en ce que** l'élargissement (40) du boudin d'accueil (39) est disposé en chevauchement avec l'assemblage par agrafage (20, 21).

6. Cuve de lavage (2) selon l'une des revendications précédentes, **caractérisée en ce que** la bride de fixation (22) comprend une partie (23) de l'assemblage par agrafage (20, 21) et **en ce que** le moyen d'étanchéité de pli (24) est prévu dans l'assemblage par agrafage (20, 21) et sous forme de lèvre de moyen d'étanchéité (25), dans laquelle une surface de section transversale (A1) de la lèvre de moyen d'étanchéité (25) est plus grande dans une partie (23) de la bride de fixation (22) formée par l'assemblage par agrafage (20, 21) qu'une surface de section transversale (A2) dans une zone intermédiaire (26) de l'assemblage par agrafage (20, 21), prévue le long du sens de la profondeur (y) de la cuve de lavage (2) entre un orifice de remplissage (6) de la cuve de lavage (2) et la paroi arrière (9) de la cuve de lavage (2).

7. Cuve de lavage (2) selon la revendication 6, **caractérisée en ce que** la plus grande surface de section transversale (A1) de la lèvre de moyen d'étanchéité (25) présente une surface au moins double, triple, quadruple, quintuple à la surface de section transversale (A2) dans la zone intermédiaire (26) de l'assemblage par agrafage (20, 21), laquelle est prévue le long du sens de la profondeur (y) de la cuve de lavage (2) entre un orifice de remplissage (6) de la cuve de lavage (2) et la paroi arrière (9) de la cuve de lavage (2).

8. Cuve de lavage (2) selon la revendication 6 ou 7, **caractérisée en ce que** le moyen d'étanchéité de pli (24) est formé sous la forme d'un adhésif thermofusible et/ou de silicone.

9. Cuve de lavage (2) selon la revendication 6, 7 ou 8, **caractérisée en ce que** le moyen d'étanchéité de paroi arrière (27) est prévu de façon périphérique le long de la bride de fixation (22) entre la paroi arrière (9) et la bride de fixation (22), le moyen d'étanchéité de pli (24) et le moyen d'étanchéité de paroi arrière (27) étant en contact dans la partie (23) de la bride de fixation (22) constituée par l'assemblage par agrafage (20, 21).

10. Cuve de lavage (2) selon l'une des revendications 6 à 9, **caractérisée en ce qu'**un cadre (16) est prévu, lequel est prévu à un orifice de remplissage (6) de la cuve de lavage (2) et disposé au moins par sections à l'intérieur du manteau de cuve de lavage en forme de U (12) et au moins par sections en dehors du manteau de cuve de lavage en forme de U (12), **en ce que** l'assemblage par agrafage (20, 21) comprend une zone de chevauchement (29) avec le cadre (16) et **en ce qu'**une surface de section transversale (A3) de la lèvre de moyen d'étanchéité (25) est plus grande dans la zone de chevauchement (29) que la surface de section transversale (A2) dans la zone (26) de l'assemblage par agrafage (20, 21), prévue le long du sens de la profondeur (y) de la cuve de lavage (2) entre un orifice de remplissage (6) de la cuve de lavage (2) et la paroi arrière (9) de la cuve de lavage (2).

11. Cuve de lavage (2) selon la revendication 10, **caractérisée en ce que** l'assemblage par agrafage (20, 21) présente dans la zone de chevauchement (29) de l'assemblage par agrafage (20, 21) une largeur plus grande que dans la zone (26) de l'assemblage par agrafage (20, 21) prévue le long du sens de la profondeur (y) de la cuve de lavage (2) entre un orifice de remplissage (6) de la cuve de lavage (2) et la paroi arrière (9) de la cuve de lavage (2).

12. Lave-vaisselle ménager (1) avec une cuve de lavage (2) selon l'une des revendications précédentes.

13. Procédé de fabrication d'une cuve de lavage (2) pour un lave-vaisselle ménager (1), comprenant les étapes :
- mise à disposition (S10 ; S1) d'une tôle de fond (7), d'une paroi arrière (9) et d'un manteau de cuve de lavage en forme de U (12),
- disposition (S20 ; S3) du manteau de cuve de lavage en forme de U (12) sur la tôle de fond (7), formation (S30 ; S4) de l'assemblage par agrafage (20, 21) et liaison du manteau de cuve de lavage en forme de U (12) à la tôle de fond (7) à l'aide de l'assemblage par agrafage (20,21),
- formation (S40 ; S5) d'une bride de fixation (22) sur la tôle de fond (7) et le manteau de cuve de lavage en forme de U (12) pour fixer la paroi arrière (9) à la tôle de fond (7) et au manteau de cuve de lavage en forme de U (12),
- disposition (S50) de la paroi arrière (9) sur la bride de fixation (22),
- prévision (S60) d'un moyen d'étanchéité de pli (24) dans l'assemblage par agrafage (20, 21),
- prévision (S70) d'un moyen d'étanchéité de paroi arrière (27) entre la paroi arrière (9) et la bride de fixation (22), et
- prévision (S80) d'un moyen d'étanchéité supplémentaire (31) entre le moyen d'étanchéité de pli (24) et le moyen d'étanchéité de paroi arrière (27).

14. Procédé selon la revendication 13, **caractérisé en ce qu'**après la disposition (S50) de la paroi arrière (9) sur la bride de fixation (22), une force de pression (F) est apposée à l'aide d'un tampon (33) sur une section d'angle pliée (34) de l'assemblage par agrafage (20, 21) pour la réduction d'un rayon d'angle (R) de l'assemblage par agrafage (20, 21) dans la section d'angle (34) et pour l'insertion du moyen d'étanchéité supplémentaire (31) dans l'assemblage par agrafage (20, 21).

15. Procédé selon la revendication 13 ou 14, avec les étapes :
- avant la disposition (S3) du manteau de cuve de lavage en forme de U (12) sur la tôle de fond (7), prévision (S2) d'un moyen d'étanchéité de pli (24) sur la tôle de fond (7) et/ou le manteau de cuve de lavage en forme de U (12) pour l'étanchéification d'un assemblage par agrafage (20, 21) et formation d'une lèvre de moyen d'étanchéité (25), et
- avant la disposition (S50) de la paroi arrière (9) sur la bride de fixation (22), disposition (S5) d'une bride de fixation (22) sur la tôle de fond (7) et le manteau de cuve de lavage en forme de U (12) pour fixer la paroi arrière (9) à la tôle de fond (7) et au manteau de cuve de lavage en forme de U (12), dans lequel une surface de section transversale (A1) de la lèvre de moyen d'étanchéité (25) est plus grande dans une partie (23) de la bride de fixation (22) formée par l'assemblage par agrafage (20, 21) qu'une surface de section transversale (A2) dans une zone intermédiaire (26) de l'assemblage par agrafage (20, 21), prévue le long du sens de la profondeur (y) de la cuve de lavage (2) entre un orifice de remplissage (6) de la cuve de lavage (2) et la paroi arrière (9) de la cuve de lavage (2).
